# EUROPÄISCHE PATENTSCHRIFT

(11) **EP 2 540 473 B1**
(45) Veröffentlichungstag und Bekanntmachung des Hinweises auf die Patenterteilung: **13.06.2018**
(21) Anmeldenummer: 12173178.0
(22) Anmeldetag: 22.06.2012
(51) Int. Cl.: B29C 49/12, B29C 49/46, B29C 49/06, B29C 49/36

(54) **Vorrichtung und Verfahren zum Umformen von Kunststoffvorformlingen zu Kunststoffbehältnissen mit durch Rollmembran abgedichteter Reckstangenbewegung**
Device and method for deforming plastic preforms into plastic containers with moving stretching rod sealed by rolling membrane
Dispositif et procédé de transformation d'ébauches en matière synthétique pour devenir des conteneurs en plastique avec mouvements de tige d'étirage étanches grâce à une membrane enroulable

(30) Priorität: 27.06.2011 DE 102011106306
(43) Veröffentlichungstag der Anmeldung: 02.01.2013
(73) Patentinhaber: Krones AG, 93073 Neutraubling (DE)
(72) Erfinder: Neubauer, Michael, D-93073 Neutraubling (DE); Kerim, Yasin, D-93073 Neutraubling (DE); Handschuh, Eduard, D-93073 Neutraubling (DE)
(74) Vertreter: Bittner, Bernhard

(56) Entgegenhaltungen:
- EP-A1- 1 258 336
- EP-A1- 2 388 129
- EP-A2- 2 388 127
- EP-A2- 2 537 662
- WO-A2-2010/020529
- DE-A1-102008 038 143
- US-A- 4 946 366

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Üblicherweise weist eine derartige Vorrichtung zum Umformen von Kunststoffvorformlingen zu Kunststoffbehältnissen, im folgenden auch Streckblasmaschine genannt, mehrere Blasstationen auf, in denen die Vorformlinge durch Anlegen eines Innendrucks zu Kunststoffflaschen geblasen werden. Diese fertig geblasenen Kunststoffbehältnisse sind nach diesem Prozess verschmutzt und müssen hinterher aufwändig gereinigt werden, um bestimmte Hygienestandards einzuhalten.

Eine wichtige Komponente einer derartigen Streckblasmaschine beziehungsweise einer Blasstation ist die Reckeinheit. Diese lagert und führt die Reckstange. Die Reckstange fährt in den Kunststoffvorformling ein und reckt ihn bis zum Formboden aus. Der Blasdruck formt endgültig die Flasche und die Reckeinheit fährt die Reckstange wieder aus der fertigen Flasche zurück.

Aus dem Stand der Technik ist es bekannt, dass die Reckeinheit an einer Linearführung über einen Momentenschlitten beziehungsweise Reckschlitten verbunden und geführt ist. Dies ist bedeutsam, da die Reckstange üblicherweise über einen sehr langen Hub, der bis zu 450 mm reicht, sehr genau zentrisch geführt werden muss. Der Reckschlitten wird dabei in seiner bekannten Ausgestaltung von einem Linearmotor angetrieben. Dieser ist zentrisch zur Reckachse gelagert und fährt mit einer sehr hohen Geschwindigkeit aus und ein.

Auch ist es bekannt, dass die Reckstangen über eine Führungskurve bewegt werden. Im Stand der Technik ist die Mechanik in einem unreinen Raum ohne jeglichen Schutz vor Verschmutzungen. Dies bedeutet, dass die fertig geformte Flasche verschmutzt ist und daher in einem eigenen Modul, wie einem Rinser hygienisch gereinigt werden muss.

Aus der WO 2010/020529 A2 ist eine sterile Blasmaschine gemäß dem Oberbegriff des Anspruchs 1 bekannt. Der Gegenstand dieser Druckschrift wird hiermit durch Bezugnahme vollumfänglich auch zum Gegenstand der vorliegenden Anmeldung gemacht.

Derzeit sind keine Streckblasmaschinen bekannt, welche Kunststoffflaschen produzieren, die aseptisch geblasen werden. Die Mechanik und der "unreine Ablauf" des Reckprozesses sind bei allen aktuellen Maschinen auf dem Markt ähnlich.

Der vorliegenden Erfindung liegt daher die Aufgabe zugrunde, eine Streckblasmaschine zur Verfügung zu stellen, welche insbesondere auch eine hygienisch konstruierte Reckeinheit aufweist.

Diese Aufgabe wird erfindungsgemäß durch den Gegenstand der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen wird in dem Anspruch 1 definiert. Die Blasstation weist einen Aufnahmeraum mit wenigstens einer Wandung zum Aufnehmen der Reckstange auf, wobei dieser Aufnahmeraum die Reckstange wenigstens teilweise umgibt und die Reckstange gegenüber diesem Aufnahmeraum beweglich ist und wobei erfindungsgemäß innerhalb des Aufnahmeraums eine flexible Dichtungseinrichtung angeordnet ist, welche einen sterilen Raumbereich der Vorrichtung von einem unsterilen Raumbereich der Vorrichtung trennt.

Es wird daher erfindungsgemäß vorgeschlagen, dass die Reckstange selbst sich permanent im Reinraum bewegt und mittels der besagten Dichtungseinrichtung gegenüber der unsterilen Umgebung abgedichtet wird. Aus dem Stand der Technik ist eine Vorgehensweise bekannt, bei der die Reckstangenbewegung mittels eines Faltenbalgs gegenüber der Umgebung abgedichtet ist. Dieser Faltenbalg ist jedoch im Rahmen der Sterilisation teilweise nur recht aufwendig zu reinigen. Daher wird nunmehr vorgeschlagen, dass ein Bereich der Reckstange innerhalb eines Aufnahmeraums angeordnet ist und die Bewegung über eine flexible Dichtungseinrichtung abgedichtet wird.

Bei einer bevorzugten Ausführungsform steht dabei der sterile bzw. sterilgehaltene Raumbereich der Vorrichtung mit dem oben erwähnten Reinraum der Vorrichtung in Strömungsverbindung.

Bei der Antriebseinrichtung zum Bewegen der Reckstange kann es sich beispielsweise um einen Linearmotor beziehungsweise Elektromotor oder einen mechanischen oder hydraulischen Antrieb handeln. Es wäre jedoch auch möglich, dass der Antrieb der Reckstange über eine Kurvenrolle und eine entsprechende insbesondere stationär angeordnete Führungskurve erfolgt. Diese Führungskurve kann dabei beispielswiese außerhalb des Reinraums angeordnet sein. Bei der Transporteinrichtung, welche die Blasstation beziehungsweise die Blasform transportiert, kann es sich beispielsweise um ein drehbar angeordnetes Blasrad handeln, an dem eine Vielzahl derartiger Blasstationen angeordnet ist. Vorteilhaft ist auch die Beaufschlagungseinrichtung innerhalb des Reinraums angeordnet und vorteilhaft gegenüber den zu expandierenden Behältnissen bewegbar.

Bei einer weiteren vorteilhaften Ausführungsform ist die Reckstange an einer Halteeinrichtung angeordnet und diese Halteeinrichtung erstreckt sich durch eine Wandung des Aufnahmeraums hindurch.

Bei einer vorteilhaften Ausführungsform ist die Dichtungseinrichtung als Rollmembran ausgeführt. Dabei ist es möglich, dass ein Bereich dieser Rollmembran an einem Bereich der Reckstange oder einem mit der Reckstange beweglichen Bereich angeordnet ist und ein weiterer Abschnitt in einem Bereich des besagten Gehäuses. Eine derartige Rollmembran eignet sich, um insbesondere bei vergleichsweise großen Hubbewegungen, wie hier die Bewegungen der Reckstange gleichwohl eine Abdichtung zu erreichen. Auf diese Weise wird die Reckstange mit der besagten Rollmembran hygienisch abgedichtet.

Bei einer weiteren vorteilhaften Ausführungsform herrscht in dem besagten sterilen Raumbereich der Vorrichtung in einem Arbeitsbetrieb der Vorrichtung ein höherer Druck als in dem unsterilen Raumbereich. Vorteilhaft beträgt die Druckdifferenz zwischen dem sterilen Bereich und dem unsterilen Bereich zwischen 0,2 bar und 4 bar, bevorzugt zwischen 0,3 bar und 3 bar und besonders bevorzugt zwischen 0,5 bar und 2 bar.

Durch diesen Druckunterschied kann erreicht werden, dass sich eine Falte der besagten Rollmembran, insbesondere während der Bewegung, besser ausbildet. Weiterhin kann dadurch erreicht werden, dass sich die Rollmembran gleichmäßig an einem Träger, wie beispielsweise einem unten genauer beschriebenen inneren und äußeren Zylinder anlegt. Dabei ist, wie oben erwähnt, dieser Bereich höheren Drucks mit Sterilluft gefüllt und auf diese Weise wird verhindert, dass im Fall eines Risses der Membran unsterile Luft in den Sterilbereich gelangen kann. Bei der Sterilisation der gesamten Vorrichtung wird auch der genannte sterile Bereich einschließlich etwaiger Sterilluftleitungen für diesen Bereich sterilisiert. Bei dieser Ausgestaltung kann ein Druckausgleichsbehälter vorgesehen sein.

Bei einer weiteren vorteilhaften Ausführungsform weist die Vorrichtung daher ein Reservoir zur Aufrechterhaltung des Drucks in dem sterilen Bereich auf, welches in Strömungsverbindung mit dem sterilen Bereich steht. Dabei ist es möglich, dass ein Reservoir mehreren Blasstationen zugeordnet ist, es wäre jedoch auch möglich, dass ein Reservoir jeweils einer Blasstation zugeordnet ist oder, dass ein Reservoir sämtlichen Blasstationen zugeordnet ist. Bei einer weiteren vorteilhaften Ausführungsform weist die Vorrichtung eine Antriebseinrichtung zum Bewegen der Reckstange entlang deren Längsrichtung auf und diese Antriebseinrichtung ist außerhalb des Reinraums angeordnet. Bei dieser Antriebseinrichtung kann es sich beispielsweise um einen Linearmotor handeln, es wäre jedoch auch, wie oben erwähnt, die Verwendung von Führungskurven denkbar.

Bei einer weiteren vorteilhaften Ausführungsform weist die Dichtungseinrichtung einen ersten in der Bewegungsrichtung der Reckstange stationär angeordneten Endabschnitt und einen zweiten in der Bewegungsrichtung der Reckstange beweglichen Endabschnitt auf. Unter einem Endabschnitt werden dabei vorteilhaft diejenigen Bereiche der Rollmembran verstanden, welche in den letzten bzw. in den äußersten 20 Prozent der Rollmembran, insbesondere in den äußersten 10 Prozent und besonders bevorzugt in den äußersten 5 Prozent der Rollmembran liegen.

Dabei ist es möglich, dass sich der bewegliche Endabschnitt der Rollmembran mit der Reckstange mitbewegt und beispielsweise an einem Bereich der Reckstange selbst oder auch an einem Träger der Reckstange angeordnet ist. Vorteilhaft ist dabei die Rollmembran lösbar an dem besagten Träger der Reckstange angeordnet. Auch ist die Rollmembran vorteilhaft lösbar mit ihrem zweiten Endabschnitt an einem Element wie dem Gehäuse angeordnet.

Bei einer weiteren vorteilhaften Ausführungsform liegt der zweite Endabschnitt in der Längsrichtung zeitweise oberhalb des ersten Endabschnitts und zeitweise unterhalb des ersten Endabschnitts. Falls beispielsweise die Reckstange vollständig in den Kunststoffvorformling eingefahren ist, um diesen zu dehnen, liegt vorteilhaft der bewegliche Endabschnitt unterhalb des stationär angeordneten Endabschnitts, falls der Kunststoffvorformling bzw. das Behältnis unterhalb der Reckstange angeordnet ist. Es sind jedoch auch Ausführungsformen bekannt, bei denen die Reckstange von unten her in das Behältnis eingeführt wird. In diesen Fällen liegt in einem in das Behältnis eingefahrenen Zustand der Reckstange der bewegliche Endabschnitt bevorzugt oberhalb des stationär angeordneten Endabschnitts. Vorteilhaft liegt der besagte zweite Endabschnitt sowohl zeitweise oberhalb des ersten Endabschnitts, als auch zeitweise unterhalb des ersten Endabschnitts. Vorteilhaft ist die Amplitude des beweglichen Endabschnitts gegenüber dem ersten Endabschnitt zu beiden Seiten hin im Wesentlichen konstant bzw. die jeweiligen Entfernungen in der Längsrichtung zu dem stationären Endabschnitt unterscheiden sich um max. 20 Prozent.

Bei einer weiteren vorteilhaften Ausgestaltung ist der erste Endabschnitt an dem Gehäuse angeordnet.

Bei einer weiteren vorteilhaften Ausführungsform weist die Vorrichtung wenigstens einen Anlegebereich auf, an dem die Dichtungseinrichtung wenigstens zeitweise flächig anliegt. Durch diesen Anlegebereich ist es möglich, dass die Rollmembran verschleißarm den Bewegungen der Reckstange folgen kann und auch mit vergleichsweise hohen Drücken beaufschlagt werden kann.

Es wäre weiterhin auch möglich, dass die Vorrichtung zwei Anlegebereiche aufweist, sodass die Dichtungseinrichtung sowohl an einem inneren Anlegebereich, als auch an einem äußeren Anlegebereich anliegen kann.

Bei einer weiteren vorteilhaften Ausführungsform umgibt die Dichtungseinrichtung einen mit einem gasförmigen Medium gefüllten Raum und trennt diesen gegenüber der Umgebung ab. Bei dieser Ausgestaltung kann die Rollmembran bzw. die Dichtungseinrichtung schlauchförmig ausgeführt sein und besonderes bevorzugt außen eine Art Mitnehmer aufweisen. Mithilfe dieser Mitnehmer, die beispielsweise als Nasen ausgeführt sein können, wird die Rollmembran zum einen am Gehäuse und zum anderen an einer Reckstangenaufnahme vorteilhaft befestigt. In diesem Falle stellt der Bereich mit dem höheren Druck einen komplett geschlossenen Bereich dar und wird vorteilhaft mit einem konstanten Druck mit Sterilluft beaufschlagt, wobei durch diesen konstanten Überdruck wiederum eine Verschmutzung von sterilen Bereichen verhindert werden kann.

Die oben erwähnten Reservoirs bzw. Druckausgleichsbehälter können dabei derart ausgestaltet sein, dass sie im Falle einer Rollmembran in normaler Ausführung ihr jeweiliges Volumen in Abhängigkeit von der Reckstangenposition ändern. Damit der Druck in diesem Bereich annähernd konstant bleibt, wird dabei ein Druckausgleichsbehälter vorgeschlagen. Während die Reckstange nach unten fährt, um den Kunststoffvorformling zu dehnen, wird Sterildruck aus dem genannten unsterilen Bereich in das Reservoir verdrängt und beim Hochfahren gelangt die Sterilluft zurück aus dem Reservoir in den sterilen Bereich. Das Volumen dieses Reservoirs wird dabei derart gewählt, dass der Druck während des gesamten Reckstangenhubs die Druckgrenzwerte (die vorteilhaft zwischen 0,5 bar und 2 bar liegen) nicht übersteigt. Diese Druckausgleichsbehälter bzw. Reservoirs und die Verbindungsleitungen sind vorteilhaft in ihrem Inneren hygienisch ausgeführt und können sterilisiert werden. Vorteilhaft ist auch eine Variante zum Sterilisieren geeignet. Dabei ist es beispielsweise möglich, ein Sterilisationsmedium durch einen Luftanschluss des Druckausgleichsbehälters einzuleiten.

Es wäre weiterhin auch möglich, dass zwischen einzelnen Blasstationen und deren sterilen Räumen jeweils Verbindungsleitungen bestehen, beispielsweise dass der Überdruck der durch eine Reckstangenbewegung nach unten entsteht, kompensiert wird durch eine Druckänderung bei einer Blasstation, bei der die Reckstange sich gerade zurückzieht.

Bei einer vorteilhaften Ausführungsform ist der Aufnahmeraum im Wesentlichen zylinderförmig ausgebildet. Die Reckstange ist innerhalb dieses Zylinders geführt. Bevorzugt ist die Reckstange mittig in diesem Zylinder angeordnet, d. h. ihre Bewegungsrichtung fällt mit einer Symmetrieachse des Zylinders zusammen.

Die vorliegende Erfindung ist weiterhin auf ein Verfahren zum Umformen von Kunststoffvorformlingen zu Kunststoffbehältnissen gemäß Anspruch 10 gerichtet. Die Reckstange wird zumindest teilweise innerhalb des Aufnahmeraums bewegt, wobei erfindungsgemäß innerhalb des Aufnahmeraums ein steriler Raumbereich mittels einer flexiblen Dichtungseinrichtung gegenüber einem unsterilen Raumbereich abgetrennt wird. Es wird daher auch verfahrensseitig vorgeschlagen, eine Abdichtung der Reckstange bzw. der Reckstangenbewegung durch die oben erwähnte Dichtungseinrichtung, die innerhalb des Aufnahmeraums angeordnet ist, zu erreichen.

Vorteilhaft bewegt sich ein Endabschnitt der Dichtungseinrichtung gegenüber einem anderen Endabschnitt der Dichtungseinrichtung in der Längsrichtung der Reckstangenbewegung.

Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen;
- Fig. 2: eine Ansicht eines Reinraums im Bereich einer Blasstation,
- Fig. 3: eine Seitendarstellung einer erfindungsgemäßen Reckeinheit;
- Fig. 4a, 4b: eine vergrößerte Darstellung einer Reckeinheit;
- Fig. 5a, 5b: eine weitere Detaildarstellung der in Fig. 3 gezeigten Reckeinheit in einer unteren Position der Reckstange;
- Fig. 6: eine schematische Darstellung in einer oberen Reckstangenposition;
- Fig. 7: eine schematische Darstellung in einer unteren Reckstangenposition;
- Fig. 8a-8c: drei Detaildarstellungen der Reckeinheit;
- Fig. 9: eine weitere Darstellung der Reckeinheit in einer unteren Reckstangenposition;
- Fig. 10: eine schematische Darstellung einer Reckeinheit in einer weiteren Ausführungsform;
- Fig. 11: eine Detaildarstellung einer weiteren Reckeinheit;
- Fig. 12a, 12b: zwei weitere Darstellungen der in Fig. 10 gezeigten Reckeinheit;
- Fig. 13: eine Darstellung der Reckeinheit aus Fig. 10 in einer unteren Reckstangenposition;
- Fig. 14: eine weitere schematische Darstellung einer Reckeinheit;
- Fig. 15: eine Darstellung einer Reckeinheit mit Ausgleichsreservoir; und
- Fig. 16a-16d: vier mögliche Anordnungen für Reservoirs.

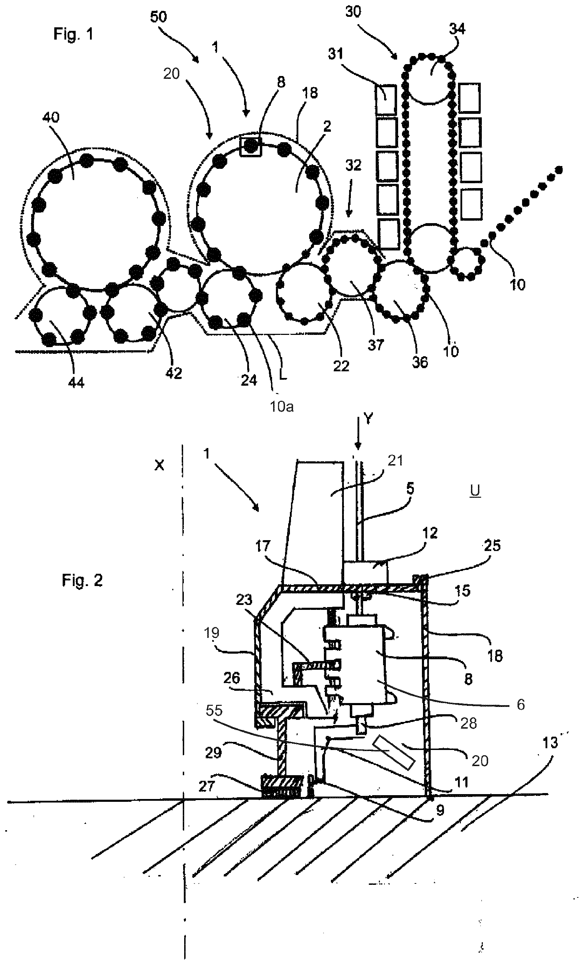

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg 14 vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

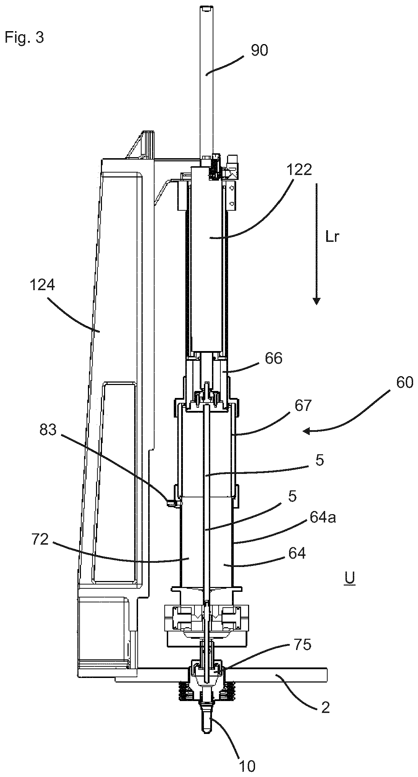

Fig. 3 zeigt eine Seitendarstellung einer erfindungsgemäßen Reckeinheit 60. Diese Reckeinheit 60 weist dabei einen in seiner Gesamtheit mit 64 bezeichneten Aufnahmeraum auf, innerhalb dessen sich die Reckstange 5 in der Richtung des Pfeils Lr bewegt. Dieser Aufnahmeraum umgibt dabei die Reckstange im Wesentlichen vollständig. Das Bezugszeichen 64a bezieht sich auf eine hier umlaufende Wandung, welche diesen Aufnahmeraum 64 gegenüber der Umgebung abtrennt. Die Reckstange 5 dient zum Dehnen des Kunststoffvorformlings 10 in seiner Längsrichtung, welche hier mit der Richtung Lr zusammenfällt. Zugleich wird der Kunststoffvorformling mithilfe einer Blasdüse 75 durch Beaufschlagung mit Blasluft innerhalb einer (nicht gezeigten) Blasform expandiert.

Das Bezugszeichen 124 kennzeichnet einen Träger, an dem eine Antriebseinrichtung 122, wie hier ein Linearantrieb, angeordnet ist. Dieser Linearantrieb 122 bewegt einen Träger 90, an dem wiederum ein Zylinder 66 angeordnet ist. An diesem Zylinder ist auch die Dichtungseinrichtung (hier nicht detailliert gezeigt) angeordnet, wobei die Dichtungseinrichtung als Rollmembran ausgeführt ist. Das Bezugszeichen 67 kennzeichnet einen weiteren Zylinder, hier einen Außenzylinder, der zur Abstützung der Rollmembran dient. An diesem Zylinder 67 ist die Rollmembran in der Längsrichtung Lr ortsfest angeordnet. Auch der Zylinder 67 ist in der Richtung Lr stationär. Das Bezugszeichen 83 bezieht sich auf eine Öffnung, um den Aufnahmeraum 64 mit einem Druckmedium und insbesondere mit Sterilluft zu befüllen.

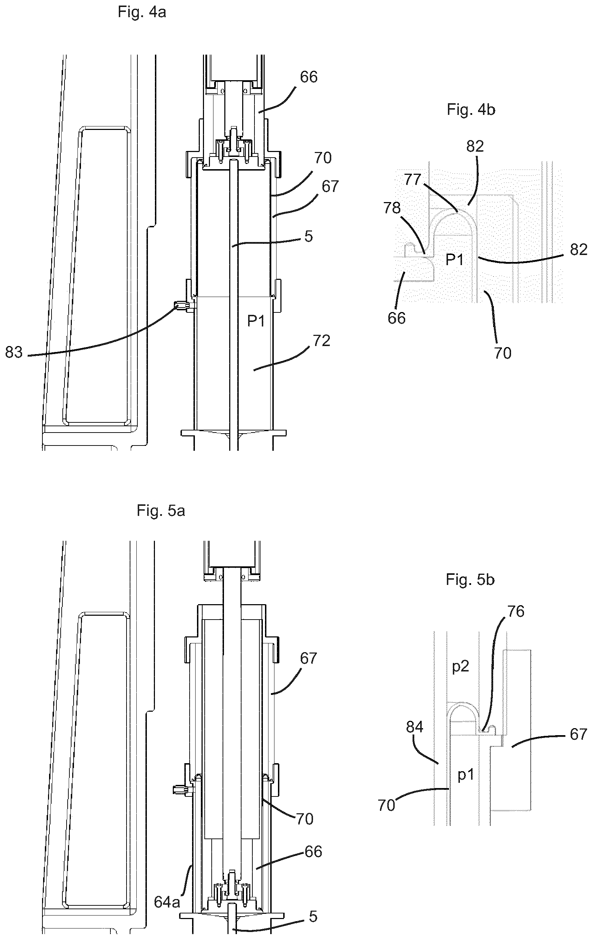

Fig. 4a zeigt eine Detaildarstellung der in Fig. 3 gezeigten Vorrichtung. Man erkennt hier wieder den äußeren Zylinder 67, an dem ein Ende der Rollmembran 70 angeordnet ist. Das Bezugszeichen 72 kennzeichnet einen sterilen Raum, der hier durch die Rollmembran 70 abgegrenzt wird. Innerhalb dieses sterilen Raumbereichs 72 herrscht ein Luftdruck P1.

Fig. 4b zeigt eine vergrößerte Darstellung des oberen Bereichs der Dichtungseinrichtung 70. Man erkennt, dass die Dichtungseinrichtung 70 mit einem Endabschnitt 78 fest an dem Zylinder 66 angeordnet ist und sich damit mit der Reckstange 5 mitbewegt. Das Bezugszeichen 77 kennzeichnet eine Falte der Rollmembran, die sich in Abhängigkeit von der Bewegung der Reckstange 5 ebenfalls in der Längsrichtung Lr mitbewegt. Das Bezugszeichen 82 kennzeichnet jeweils eine Anlagefläche (die größtenteils radial außerhalb der Rollmembran liegt), an der die Rollmembran von außen her abgestützt wird, um so den Druck P1 aufnehmen zu können. Wie oben erwähnt, wird dieser sterile Raumbereich mit einem Druck P1 beaufschlagt, der höher ist als ein Druck P2 außerhalb dieser Rollmembran.

Fig. 5a zeigt eine weitere Darstellung der in Fig. 3 gezeigten Vorrichtung, hier jedoch in einer unteren Stellung des inneren Zylinders 66, d. h. einer Stellung, in der die Reckstange vollständig in den Kunststoffvorformling eingefahren ist. Man erkennt, dass der innere Zylinder 66, an dem die Reckstange 5 angeordnet ist, in der unteren Position angeordnet ist und entsprechend auch die Dichtungseinrichtung 70 in ihrer unteren Position angeordnet ist.

Fig. 5b zeigt eine vergrößerte Darstellung des hier stationären Endabschnitts 76 der Dichtungseinrichtung 70, welche an dem äußeren Zylinder 67 angeordnet ist. Man erkennt hier wiederum den Druckbereich P1 des sterilen Raumbereichs 72, der im Bereich der Reckstange anliegt, sowie den Druck P2 der niedriger ist, und oberhalb der Dichtungseinrichtung 70 anliegt. Das Bezugszeichen 84 kennzeichnet hier eine innere Anlagefläche, an der die Rollmembran in diesem Zustand anliegt und gegenüber der die Rollmembran abgestützt wird. Diese Anlagefläche liegt radial innerhalb der Rollmembran.

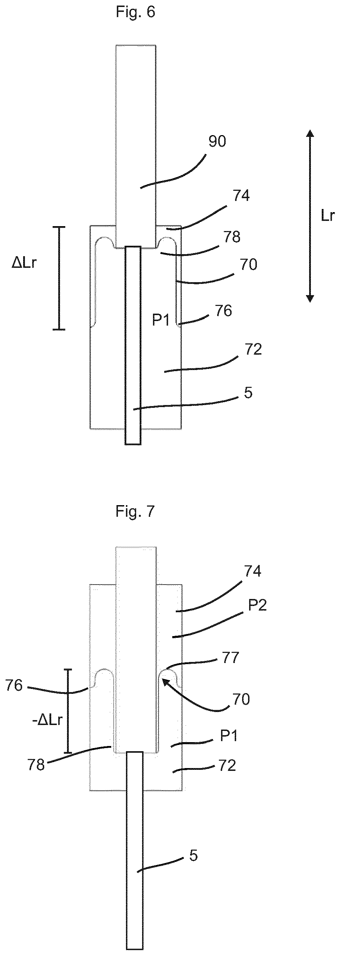

Fig. 6 zeigt eine vergrößerte Darstellung dieses Sachverhalts. Hier ist die Reckstange 5 wieder in ihrer oberen Position und man erkennt wiederum den Druckbereich P1 in dem sterilen Raumbereich 72. Auch erkennt man hier die beiden Endabschnitte 76 und 78 der Dichtungseinrichtung 70, wobei wie oben erwähnt, der Endabschnitt 76 unbeweglich in der Längsrichtung Lr und der Endabschnitt 78 beweglich. Das Bezugszeichen 90 kennzeichnet wiederum grob schematisch den Träger, an dem die Reckstange angeordnet ist. Das Bezugszeichen ΔLr zeigt die Amplitude, um welche die Reckstange hier nach oben ausgelenkt ist, d. h. um die der bewegliche Endabschnitt 78 gegenüber dem stationären Endabschnitt 76 nach oben hin ausgelenkt ist. Oberhalb der Dichtungseinrichtung 70 liegt wiederum ein unsteriler Raumbereich 74 mit einem Druck P2.

Fig. 7 zeigt die gleiche Situation wie in Fig. 6, nur in diesem Falle die Reckstange in ihrer unteren Position. Auch hier ist wieder die Dichtungseinrichtung 70 mit der Falte 77 sowie der Sterilraumbereich 72 und der unsterile Raumbereich 74 erkennbar. Auch sind die beiden Drücke P1 und P2 dargestellt. Man erkennt wiederum die beiden Endabschnitte 76 und 78 der Dichtungseinrichtung. Auch erkennt man hier, dass nunmehr der Träger 90 gegenüber dem Endabschnitt 76 nach unten hin ausgelenkt ist, d. h. hier ist eine Auslenkung -ΔLr nach unten gegeben. Vorteilhaft unterscheiden sich die Auslenkungen ΔLr und -ΔLr dem Betrag nach um nicht mehr als 40% voneinander, bevorzugt um nicht mehr als 30% voneinander, bevorzugt um nicht mehr als 20% voneinander und besonders bevorzugt um nicht mehr als 10% voneinander.

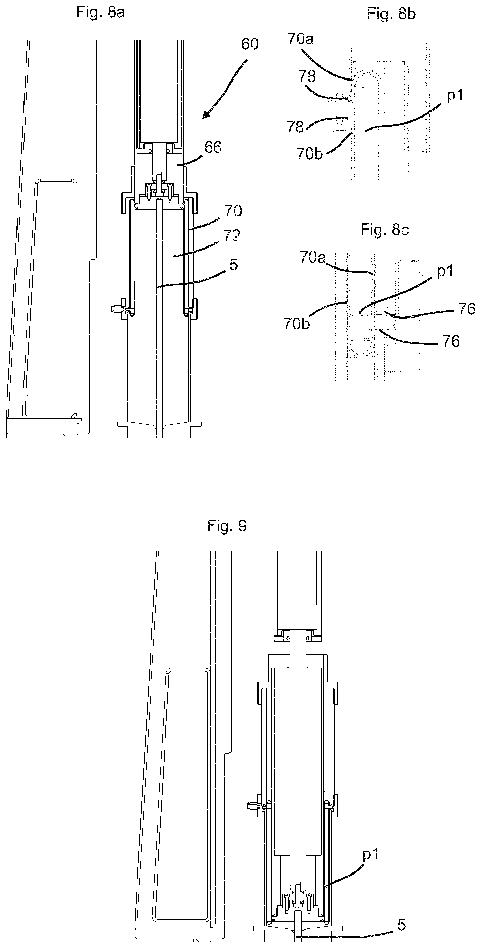

Fig. 8a zeigt eine weitere Ausführungsform einer erfindungsgemäßen Vorrichtung. Als Dichtungseinrichtung 70 sind hier zwei gleich gestaltete Rollmembrane 70a, 70b (vgl. Fig. 8b und 8c) vorgesehen, die sich entsprechend gemeinsam miteinander bewegen. Dabei ist ein Volumen mit dem Druck P1 innerhalb eines Zwischenraums zwischen diesen beiden Membranen vorhanden. Dieses Volumen, in dem der Druck P1 herrscht, bleibt dabei während der gesamten Reckstangenbewegung im Wesentlichen konstant, sodass dieses Volumen mit einem konstanten Druck mit Sterilluft beaufschlagt werden kann. Bei dieser Ausführungsform kann auf einen Druckausgleichsbehälter bzw. ein Reservoir verzichtet werden.

Fig. 9 zeigt eine Darstellung, bei der sich die Reckstange 5 in der unteren Position befindet und daher auch die Dichtungseinrichtung 70 bzw. die beiden Rollmembranen 70a und 70b in der unteren Position liegen.

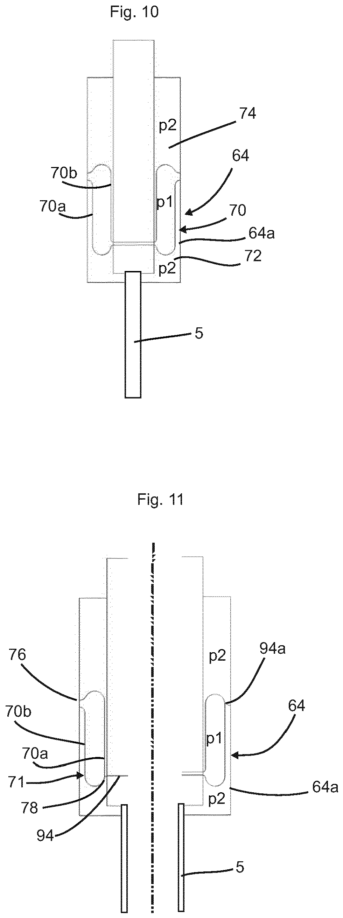

Die Fig. 10 und 11 veranschaulichen diesen Sachverhalt. Hier ist wiederum in Fig. 10 eine Rollmembran in der unteren Position dargestellt, wobei man erkennt, dass innerhalb der Dichtungseinrichtung, d. h. zwischen dem Rollmembran 70a und 70b ein Druck P1 herrscht und außerhalb dieser Rollmembranen 70a, 70b ein Druck P2. Dabei ist jedoch der untere Bereich P2, d. h. der unterhalb der Rollmembran liegende Bereich ein Sterilbereich, wohingegen der obere Bereich, d. h. der oberhalb der Rollmembranen liegende Bereich P2, ein unsteriler Bereich ist. Bei der in Fig. 10 gezeigten Variante sind die beiden Rollmembrane 70a und 70b gegenseitig eingespannt.

Fig. 11 zeigt eine weitere Variante, bei der hier eine Dichtungseinrichtung in der Art eines geschlitzten Schlauchs 71 vorgesehen ist. Dieser Schlauch kann dabei außen geschlitzt sein, d. h. in seinem Bereich 76, wodurch dieser Schlitz auch als Druckmedienanschluss genutzt werden kann. Im Inneren ist ein Mitnehmer 94 in Form einer Nase dargestellt, an dem der zweite Endabschnitt 78 bzw. der bewegliche Endabschnitt 78 der Dichtungseinrichtung 70 angeordnet ist. Auf der rechten Seite in Fig. 11 ist die umgekehrte Variante dargestellt, d. h. hier ist die Dichtungseinrichtung 70 in der radialen Innenseite geschlitzt und der Mitnehmer 94a befindet sich radial außen, d. h. an dem Gehäuse.

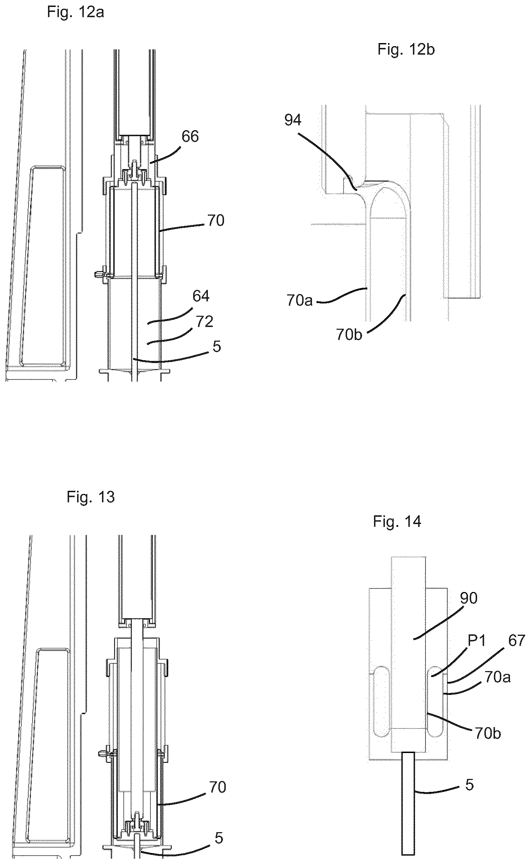

Fig. 12a zeigt eine weitere Ausführungsform einer erfindungsgemäßen Vorrichtung, wobei hier die Rollmembran bzw. die Dichtungseinrichtung 70 schlauchförmig ausgebildet ist. Dabei ist hier außen eine Art Mitnehmer in Form einer Nase vorgesehen, über welche der Membran 70, d. h. der Dichtungseinrichtung, Druckluft zugeführt werden kann.

Fig. 12b zeigt wiederum eine Detaildarstellung, wobei hier wieder die beiden Teilbereiche 70a und 70b der Dichtungseinrichtung 70 erkennbar sind. Man erkennt ebenfalls wiederum den Mitnehmer 94, mit dem die Dichtungseinrichtung außen angeordnet ist. Es wäre hier möglich, dass der Bereich innerhalb der Rollmembran, der mit dem Druck P1 beaufschlagt ist, vollständig geschlossen oder auch nach einer Seite hin offen ist. Das Bezugszeichen 72 kennzeichnet wiederum den sterilen Raumbereich.

Fig. 13 zeigt die Vorrichtung aus Fig. 12a, wobei hier jedoch wiederum die Reckstange 5 in einer unteren Position ist. Entsprechend ist auch die Dichtungseinrichtung 70 nach unten ausgelenkt. In Fig. 14 ist wiederum schematisch diese Situation veranschaulicht. Auch hier herrscht innerhalb der Dichtungseinrichtung 70 ein Druck P1. Dieser Bereich der Dichtungseinrichtung ist mit einem sterilen Medium gefüllt. Unterhalb der Dichtungseinrichtung ist wiederum der sterile Bereich vorgesehen und oberhalb der Dichtungseinrichtung 70 der unsterile Bereich. Bei dieser Ausführungsform kann sowohl ein Mitnehmer vorgesehen sein, mit dem die Dichtungseinrichtung an dem Träger 90 angeordnet ist, als auch ein Mitnehmer, mit dem die Dichtungseinrichtung an dem Gehäuse 67 angeordnet ist. Bei der in Fig. 14 dargestellten Situation umgibt die Dichtungseinrichtung 70 ein unter dem Druck p1 stehendes Volumen vollständig und insbesondere luftundurchlässig. Bevorzugt ist auch hier der Druck p1 innerhalb der Dichtungseinrichtung 70 größer als ein Druck p2 außerhalb der Dichtungseinrichtung 70.

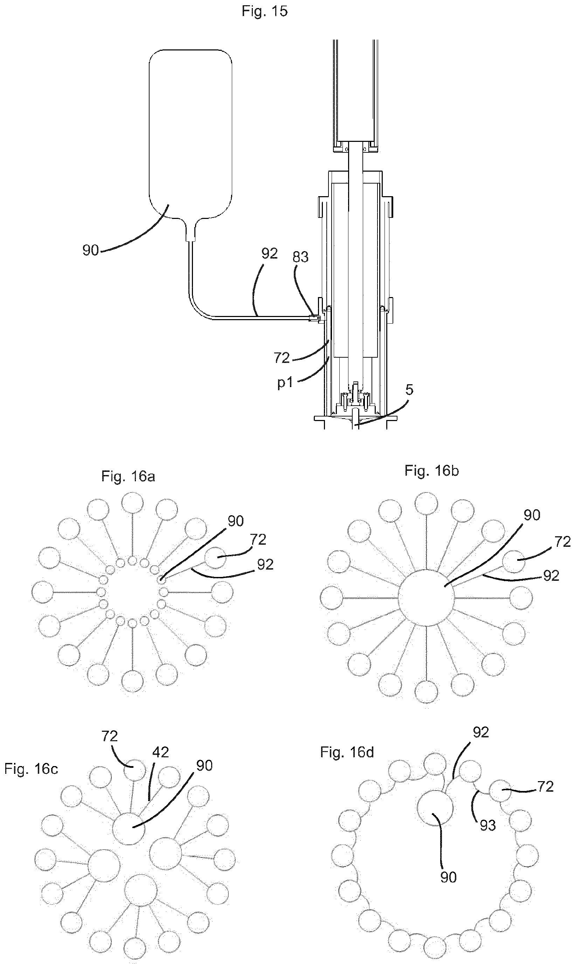

Fig. 15 zeigt eine Darstellung zur Veranschaulichung des Druckausgleichs. Man erkennt, dass hier der Reckeinheit 60 über den Anschluss 83 ein gasförmiges Medium, wie beispielsweise Sterilluft, über eine Zuführleitung 92 aus einem Reservoir 90 zugeführt wird. Dieses Reservoir 90, in dem ebenfalls der Druck P1 herrscht, bewirkt, dass unabhängig von der Position der Reckstange 5, innerhalb des sterilen Raumbereichs 72 zumindest zeitweise der gleiche Druck herrscht. Zu diesem Zweck ist das Reservoir 90 vorteilhaft in seinem Volumen erheblich größer als das Volumen des sterilen Raumbereichs 72.

Die Fig. 16a bis 16d zeigen vier mögliche Ausgestaltungen zur Anordnung von Druckreservoirs. Bei der in Fig. 16a gezeigten Anordnung ist jedem sterilen Raumbereich 72 jeweils ein Reservoir 90 zugeordnet und diese sind über eine Verbindungsleitung 92 miteinander verbunden.

Bei der in Fig. 16b gezeigten Situation ist ein zentrales Reservoir vorgesehen, welches über eine Vielzahl von Zuführleitungen 92 mit den einzelnen sterilen Raumbereichen 72 verbunden ist. In diesem Falle ist es auch möglich, dass die variierenden Volumenänderungen der Raumbereiche 72 jeweils durch das zentrale Reservoir 90 kompensiert werden.

Bei der in Fig. 16c gezeigten Situation sind mehrere Reservoirs 90 vorgesehen, wobei jedes dieser Reservoirs wiederum mehreren sterilen Raumbereichen 72 über Verbindungsleitungen 92 zugeordnet ist. Bei der in Fig. 16d gezeigten Ausführungsform sind ebenfalls sämtliche Raumbereiche 72 einem Reservoir 90 zugeordnet, wobei hier dieses Reservoir über zwei Zuführleitungen 92 mit nur zwei sterilen Raumbereichen 72 (d. h. auch Blasstationen 8) in Strömungsverbindung steht und wiederum die einzelnen Raumbereiche 72 untereinander mit Zwischenleitungen 93 verbunden sind.

### Bezugszeichenliste

- 1: Umformungsvorrichtung
- 2: Transportrad
- 5: Reckstange
- 6: Blasformträger
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Faltenbalg
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 55: Sterilisationseinrichtung
- 60: Reckeinheit
- 64: Aufnahmeraum
- 64a: umlaufende Wandung
- 66: Zylinder
- 67: weiterer Zylinder
- 70: Rollmembran, Dichtungseinrichtung
- 70a,b: Rollmembrane
- 71: Dichtungseinrichtung in der Art eines geschlitzten Schlauchs
- 72: steriler Raumbereich
- 74: unsteriler Raumbereich
- 75: Blasdüse
- 76: Endabschnitt der Dichtungseinrichtung
- 77: Falte der Rollmembran
- 78: beweglicher Endabschnitt der Dichtungseinrichtung 70
- 82: Anlagefläche
- 83: Öffnung, Anschluss
- 84: Anlagefläche
- 90: Träger/Läufer
- 92: Zuführleitung
- 93: Zwischenleitung
- 94: Mitnehmer
- 94a: Mitnehmer
- 122: Antriebseinrichtung
- 124: Träger

- L: punktierte Linie
- Lr: Bewegungsrichtung der Reckstange 5
- U: unsterile Umgebung
- X: Schwenkachse
- Y: Schwenkwelle
- P1: Druck im sterilen Raumbereich 72
- P2: Druck im unsterilen Raumbereich 74
- ΔLr: Amplitude, Auslenkung
- -ΔLr: Amplitude, Auslenkung

## Patentansprüche

1. Vorrichtung zum Umformen von Kunststoffvorformlingen (10) zu Kunststoffbehältnissen (10a) mit wenigstens einer Blasstation (8), welche an einer beweglichen Transporteinrichtung (2) angeordnet ist, wobei die Blasstation (8) eine Blasform aufweist und diese Blasform einen Hohlraum ausbildet, in dessen Innerem die Kunststoffvorformlinge (10) durch Beaufschlagung mit einem gasförmigen Medium zu den Kunststoffbehältnissen (10a) expandierbar sind, mit einer Beaufschlagungseinrichtung, welche die Kunststoffvorformlinge (10) zu deren Expansion mit dem gasförmigen Medium beaufschlagt und mit einem Reinraum (20), der die Blasstation (8) zumindest teilweise umgibt, und mit einer Reckeinheit (60), um die Kunststoffvorformlinge (10) entlang deren Längsrichtung (Lr) zu dehnen, wobei die Reckeinheit (60) eine gegenüber den Kunststoffvorformlingen (10) bewegbare Reckstange (5) aufweist, die in die Kunststoffvorformlinge (10) einführbar ist, wobei die Blasstation (8) einen Aufnahmeraum (64) mit wenigstens einer Wandung (64a) zum Aufnehmen der Reckstange (5) aufweist wobei dieser Aufnahmeraum die Reckstange wenigstens teilweise umgibt und die Reckstange (5) gegenüber diesem Aufnahmeraum (64) beweglich ist, **dadurch gekennzeichnet, dass** innerhalb des Aufnahmeraums eine flexible Dichtungseinrichtung (70) angeordnet ist, welche einen sterilen Raumbereich (72) der Vorrichtung von einem unsterilen (74) Raumbereich der Vorrichtung (1) trennt, wobei die Reckstange (5) selbst permanent im Reinraum bewegbar ist und mittels der besagten Dichtungseinrichtung (70) gegenüber der unsterilen Umgebung abgedichtet werden kann.

2. Vorrichtung (1) nach Anspruch 1,
**dadurch gekennzeichnet, dass**
die Dichtungseinrichtung (70) als Rollmembran ausgeführt ist.

3. Vorrichtung (1) nach wenigstens einem der vorangegangenen Ansprüche,
**dadurch gekennzeichnet, dass**
in dem sterilen Raumbereich (72) der Vorrichtung (1) in einem Arbeitsbetrieb der Vorrichtung (1) ein höherer Druck (P1) herrscht als in dem unsterilen Raumbereich (74).

4. Vorrichtung (1) nach Anspruch 3,
**dadurch gekennzeichnet, dass**
die Vorrichtung ein Reservoir (90) zur Aufrechterhaltung des Drucks in dem sterilen Raumbereich (72) aufweist, welches in Strömungsverbindung mit dem sterilen Raumbereich (72) steht.

5. Vorrichtung (1) nach Anspruch 1,
**dadurch gekennzeichnet, dass**
die Vorrichtung (1) eine Antriebseinrichtung (122) zum Bewegen der Reckstange (5) entlang deren Längsrichtung (Lr) aufweist und diese Antriebseinrichtung (122) außerhalb des Reinraums (20) angeordnet ist.

6. Vorrichtung (1) nach wenigstens einem der vorangegangenen Ansprüche,
**dadurch gekennzeichnet, dass**
die Dichtungseinrichtung (70) einen ersten in der Bewegungsrichtung (Lr) der Reckstange stationär angeordneten Endabschnitt (76) und einen zweiten in der Bewegungsrichtung (Lr) der Reckstange beweglichen Endabschnitt (78) aufweist.

7. Vorrichtung (1) nach Anspruch 6,
**dadurch gekennzeichnet, dass**
der zweite Endabschnitt (78) in der Längsrichtung (Lr) zeitweise oberhalb des ersten Endabschnitts (76) und/oder zeitweise unterhalb des ersten Endabschnitts (76) angeordnet ist.

8. Vorrichtung (1) nach wenigstens einem der vorangegangenen Ansprüche,
**dadurch gekennzeichnet, dass**
die Vorrichtung (1) wenigstens einen Anlegebereich (82) aufweist, an dem die Dichtungseinrichtung wenigstens zeitweise flächig anliegt.

9. Vorrichtung (1) nach wenigstens einem der vorangegangenen Ansprüche,
**dadurch gekennzeichnet, dass**
die Dichtungseinrichtung (70) einen mit einem gasförmigen Medium gefüllten Raum umgibt und diesen gegenüber einer Umgebung abtrennt.

10. Verfahren zum Umformen von Kunststoffvorformlingen (10) zu Kunststoffbehältnissen (10a), wobei die Kunststoffvorformlinge (10) mit wenigstens einer Blasstation (8), welche an einer beweglichen Transporteinrichtung (2) angeordnet ist durch einen Reinraum (20) transportiert werden und wenigstens zeitweise während dieses Transports mit einem gasförmigen Medium zu deren Expansion beaufschlagt werden, wobei die Kunststoffvorformlinge (10) weiterhin mittels einer Reckstange (5) in ihrer Längsrichtung (Lr) gedehnt werden, wobei die Reckstange (5) gegenüber den Kunststoffvorformlingen (10) in der Längsrichtung (Lr) der Reckstange (5) bewegt wird, wobei die Reckstange (5) zumindest teilweise innerhalb eines Aufnahmeraums (64) bewegt wird und innerhalb des Aufnahmeraums ein steriler Raumbereich (72) mittels einer flexiblen Dichtungseinrichtung (70) gegenüber einem unsterilen Raumbereich (74) abgetrennt wird, wobei die Reckstange (5) selbst sich permanent im sterilen Raumbereich (72) befindet, wobei sich die Reckstange (5) selbst permanent im Reinraum bewegt und mittels der besagten Dichtungseinrichtung (70) gegenüber der unsterilen Umgebung abgedichtet wird.

11. Verfahren nach Anspruch 10,
**dadurch gekennzeichnet, dass**
sich ein Endabschnitt (78) der Dichtungseinrichtung gegenüber einem anderen Endabschnitt (76) der Dichtungseinrichtung in der Längsrichtung (Lr) bewegt.

## Claims

1. An apparatus for the shaping of plastics material preforms (10) into plastics material containers (10a) with at least one blow moulding station (8) which is arranged on a movable conveying device (2), wherein the blow moulding station (8) has a blow mould and this blow mould forms a cavity in the interior of which the plastics material preforms (10) are capable of being expanded by being acted upon with a gaseous medium in order to form the plastics material containers (10a), with a stressing device which acts upon the plastics material preforms (10) with the gaseous medium in order to expand them, and with a clean room (20) which surrounds the blow moulding station (8) at least in part, and with a stretching unit (60) to stretch the plastics material preforms (10) along their longitudinal direction (Lr), wherein the stretching unit (60) has a stretch bar (5) which is movable with respect to the plastics material preforms (10) and which is capable of being inserted into the plastics material preforms (10), wherein the blow moulding station (8) has a receiving space (64) with at least one wall (64a) for receiving the stretch bar (5), wherein this receiving space surrounds the stretch bar at least in part and the stretch bar (5) is movable with respect to this receiving space (64), **characterized in that** a flexible sealing device (70), which separates a sterile room area (72) of the apparatus from a non-sterile (74) room area of the apparatus (1), is arranged inside the receiving space, wherein the stretch bar (5) itself is permanently movable in the sterile room and can be sealed against the non-sterile environment by means of said sealing device (70).

2. An apparatus (1) according to claim 1,
**characterized in that**
the sealing device (70) is designed in the form of a rolling diaphragm.

3. An apparatus (1) according to at least one of the preceding claims,
**characterized in that**
a higher pressure (P1) is present in the sterile room area (72) of the apparatus (1) in a working operation of the apparatus (1) than in the non-sterile room area (74).

4. An apparatus (1) according to claim 3,
**characterized in that**
the apparatus has a reservoir (90) for maintaining the pressure in the sterile room area (72), which reservoir (90) is connected in terms of flow to the sterile room area (72).

5. An apparatus (1) according to claim 1,
**characterized in that**
the apparatus (1) has a drive device (122) for moving the stretch bar (5) along the longitudinal direction (Lr) thereof, and this drive device (122) is arranged outside the clean room (20).

6. An apparatus (1) according to at least one of the preceding claims,
**characterized in that**
the sealing device (70) has a first end portion (76) arranged in a stationary manner in the direction of movement (Lr) of the stretch bar and a second end portion (78) movable in the direction of movement (Lr) of the stretch bar.

7. An apparatus (1) according to claim 6,
**characterized in that**
the second end portion (78) is situated in the longitudinal direction (Lr) for a time above the first end portion (76) and/or for a time below the first end portion (76).

8. An apparatus (1) according to at least one of the preceding claims,
**characterized in that**
the apparatus (1) has at least one abutment area (82) on which the sealing device rests flat at least for a time.

9. An apparatus (1) according to at least one of the preceding claims,
**characterized in that**
the sealing device (70) surrounds a room filled with a gaseous medium and separates it from an environment.

10. A method of shaping plastics material preforms (10) into plastics material containers (10a), wherein the plastics material preforms (10) are conveyed with at least one blow moulding station (8), which is arranged on a movable conveying device (2), through a clean room (20) and are acted upon with a gaseous medium at least for a time during this conveying in order to expand them, wherein the plastics material preforms (10) are also stretched by means of a stretch bar (5) in their longitudinal direction (Lr), wherein the stretch bar (5) is moved with respect to the plastics material preforms (10) in the longitudinal direction (Lr) of the stretch bar (5), wherein the stretch bar (5) is moved at least in part inside the receiving space (64), and inside the receiving space a sterile room area (72) is separated from a non-sterile room area (74) by means of a flexible sealing device (70), wherein the stretch bar (5) itself is permanently in the sterile room area (72), wherein the stretch bar (5) itself moves permanently in the clean room and is sealed against the non-sterile environment by said sealing device (70).

11. A method according to claim 10,
**characterized in that**
an end portion (78) of the sealing device moves with respect to another end portion (76) of the sealing device in the longitudinal direction (Lr).

## Revendications

1. Dispositif servant à mettre en forme des préformes en matière plastique (10) en des récipients en matière plastique (10a), avec au moins un poste de soufflage (8), qui est disposé au niveau d'un système de transport (2) mobile, dans lequel le poste de soufflage (8) présente un moule de soufflage et ledit moule de soufflage forme une cavité, à l'intérieur de laquelle les préformes en matière plastique (10) peuvent être expansées en des récipients en matière plastique (10a) en les soumettant à l'action d'un milieu sous forme gazeuse, avec un système de sollicitation, qui soumet les préformes en matière plastique (10) à l'action d'un milieu sous forme gazeuse aux fins de leur expansion, et avec une salle blanche (20), qui entoure au moins en partie le poste de soufflage (8), et avec une unité d'étirage (60) afin d'étendre les préformes en matière plastique (10) le long de leur sens longitudinal (Lr), dans lequel l'unité d'étirage (60) présente une tige d'étirage (5) pouvant être déplacée par rapport aux préformes en matière plastique (10), laquelle peut être introduite dans les préformes en matière plastique (10), dans lequel le poste de soufflage (8) présente un espace de réception (64) avec au moins une paroi (64a) servant à recevoir la tige d'étirage (5), dans lequel ledit espace de réception entoure au moins en partie la tige d'étirage et la tige d'étirage (5) est mobile par rapport audit espace de réception (64),
**caractérisé en ce qu'**
est disposé à l'intérieur de l'espace de réception un système d'étanchéité (70) flexible, qui sépare une zone d'espace stérile (72) du dispositif d'une zone d'espace non stérile (74) du dispositif (1), dans lequel la tige d'étirage (5) peut être déplacée elle-même de manière permanente dans la salle blanche et peut être étanchéifiée par rapport à l'environnement non stérile au moyen dudit système d'étanchéité (70).

2. Dispositif (1) selon la revendication 1,
**caractérisé en ce que**
le système d'étanchéité (70) est réalisé sous la forme d'une membrane déroulante.

3. Dispositif (1) selon au moins l'une quelconque des revendications précédentes,
**caractérisé en ce que**
règne dans la zone d'espace stérile (72) du dispositif (1), dans un mode de fonctionnement du dispositif (1), une pression (P1) plus élevée que dans la zone d'espace non stérile (74).

4. Dispositif (1) selon la revendication 3,
**caractérisé en ce que**
le dispositif présente un réservoir (90) servant à maintenir la pression dans la zone d'espace stérile (72), lequel est en communication fluidique avec la zone d'espace stérile (72).

5. Dispositif (1) selon la revendication 1,
**caractérisé en ce que**
le dispositif (1) présente un système d'entraînement (122) servant à déplacer la tige d'étirage (5) le long de son sens longitudinal (Lr), et ledit système d'entraînement (122) est disposé à l'extérieur de la salle blanche (20).

6. Dispositif (1) selon au moins l'une quelconque des revendications précédentes,
**caractérisé en ce que**
le système d'étanchéité (70) présente une première section d'extrémité (76) disposée de manière stationnaire dans le sens de déplacement (Lr) de la tige d'étirage et une deuxième section d'extrémité (78) mobile dans le sens de déplacement (Lr) de la tige d'étirage.

7. Dispositif (1) selon la revendication 6,
**caractérisé en ce que**
la deuxième section d'extrémité (78) est disposée dans le sens longitudinal (Lr) de manière temporaire au-dessus de la première section d'extrémité (76) et/ou de manière temporaire en dessous de la première section d'extrémité (76).

8. Dispositif (1) selon au moins l'une quelconque des revendications précédentes,
**caractérisé en ce que**
le dispositif (1) présente au moins une zone de placement (82), au niveau de laquelle le système d'étanchéité repose à plat au moins de manière temporaire.

9. Dispositif (1) selon au moins l'une quelconque des revendications précédentes,
**caractérisé en ce que**
le système d'étanchéité (70) entoure un espace rempli d'un milieu sous forme gazeuse et sépare ce dernier par rapport à un environnement.

10. Procédé servant à mettre en forme des préformes en matière plastique (10) en des récipients en matière plastique (10a), dans lequel les préformes en matière plastique (10) sont transportées à travers une salle blanche (20) avec au moins un poste de soufflage (8), qui est disposé au niveau d'un système de transport (2) mobile, et sont soumises au moins de manière temporaire au cours dudit transport à l'action d'un milieu sous forme gazeuse aux fins de leur expansion, dans lequel les préformes en matière plastique (10) sont étirées par ailleurs dans leur sens longitudinal (Lr) au moyen d'une tige d'étirage (5), dans lequel la tige d'étirage (5) est déplacée dans le sens longitudinal (Lr) de la tige d'étirage (5) par rapport aux préformes en matière plastique (10), dans lequel la tige d'étirage (5) est déplacée au moins en partie à l'intérieur d'un espace de réception (64) et, à l'intérieur de l'espace de réception, une zone d'espace stérile (72) est séparée par rapport à une zone d'espace non stérile (74) au moyen d'un système d'étanchéité (70) flexible, dans lequel la tige d'étirage (5) se trouve elle-même de manière permanente dans la zone d'espace stérile (72), dans lequel la tige d'étirage (5) se déplace elle-même de manière permanente dans la salle blanche et est étanchéifiée par rapport à l'environnement non stérile au moyen dudit système d'étanchéité (70).

11. Procédé selon la revendication 10,
**caractérisé en ce que**
une section d'extrémité (78) du système d'étanchéité se déplace par rapport à une autre section d'extrémité (76) du système d'étanchéité dans le sens longitudinal (Lr).
